**Europäisches Patentamt**

**European Patent Office**

**Office européen des brevets**

(19)

(11) Veröffentlichungsnummer: **0 247 350**
**B1**

(12) **EUROPÄISCHE PATENTSCHRIFT**

(45) Veröffentlichungstag der Patentschrift:
**10.01.90**

(51) Int. Cl.⁴: **G 01 M 1/38, G 01 M 1/30**

(21) Anmeldenummer: **87105685.9**

(22) Anmeldetag: **16.04.87**

(54) Verfahren und Vorrichtung zur Optimierung der Laufruhe eines Kraftfahrzeugrades.

(30) Priorität: **26.05.86 DE 3617625**

(43) Veröffentlichungstag der Anmeldung:
**02.12.87 Patentblatt 87/49**

(45) Bekanntmachung des Hinweises auf die Patenterteilung:
**10.01.90 Patentblatt 90/2**

(84) Benannte Vertragsstaaten:
**AT BE DE ES FR GB IT NL SE**

(56) Entgegenhaltungen:
**DE-A- 3 003 127**

**WRKSTATT UND BETRIEB, Band 103, Nr. 3, 1970, Seiten 183-188; L. KRÄMER et al.: "Einfluss der Kraftfahrzeugräder auf das Fahrverhalten"**

(73) Patentinhaber: **HOFMANN WERKSTATT-TECHNIK GMBH, Werner-von-Siemens-Strasse 2, D-6102 Pfungstadt (DE)**

(72) Erfinder: **Goebel, Eickhart, Elbestrasse 11, D-6102 Pfungstadt (DE)**
Erfinder: **Düster, Horst, Kerckhoffstrasse 156, D-4300 Essen 1 (DE)**

(74) Vertreter: **Nöth, Heinz, Dipl.-Phys., Patentanwälte Pfenning, Meinig & Partner Mozartstrasse 17, D-8000 München 2 (DE)**

## Beschreibung

Die Erfindung betrifft ein Verfahren nach dem Oberbegriff des Anspruchs 1 und eine Vorrichtung nach dem Oberbegriff des Anspruchs 13.

Bei einem derartigen Verfahren und einer derartigen Vorrichtung, die aus der DE-OS 3 003 127 bekannt sind, werden beim Zusammenbau eines Kraftfahrzeugrades, das aus Scheibenrad und aufgezogenem Reifen besteht, der Reifen und die Felge so gegeneinander verdreht, daß die statischen Unwuchtkräfte von Reifen und Scheibenrad einander entgegengerichtet sind. Zur Ermittlung der statischen Unwuchtkraft für das Scheibenrad einerseits und den Reifen andererseits wird zunächst die statische Unwucht der Felge gemessen und der Reifen dann in beliebiger Winkelstellung auf die Felge aufgezogen. Es erfolgt dann die Unwuchtmessung des montierten Rades, wobei durch vektorielle Subtraktion der Unwuchten des montierten Rades und der Felge die statische Unwucht des Reifens ermittelt wird. Der Reifen wird dann gegenüber der Felge bzw. dem Scheibenrad so verdreht, daß die statische Unwuchtkraft des Scheibenrades der statischen Unwuchtkraft des Reifens entgegengesetzt gerichtet ist. Dieses Zuordnen von Reifen zu Scheibenrad durch Verdrehen wird auch mit «Matchen» bezeichnet.

Beim bekannten Verfahren ist es erforderlich, zunächst die statische Unwucht des Scheibenrades ohne aufgezogenen Reifen zu ermitteln. Nach diesem Meßlauf ist es erforderlich, den Reifen auf das Scheibenrad aufzuziehen und dann den zweiten Meßlauf durchzuführen. Unberücksichtigt bleiben hierbei die aus den geometrischen Ungleichförmigkeiten des Scheibenrades resultierenden Unwuchten, die sich beispielsweise aus Zentrierfehlern und Formfehlern ergeben können. Beim Verdrehen des Reifens gegenüber dem Scheibenrad kann es bei Vorhandensein einer geometrischen Ungleichförmigkeit des Scheibenrades geschehen, daß die Laufruhe nicht optimal verbessert und unter Umständen sogar verschlechtert wird.

Aufgabe der Erfindung ist es demgegenüber, bei einem Verfahren und einer Vorrichtung der eingangs genannten Art unter Berücksichtigung der tatsächlichen Einflüsse auf das Laufverhalten des Rades eine Optimierung der Laufruhe zu erreichen.

Diese Aufgabe wird bei der Erfindung verfahrensmäßig durch die kennzeichnenden Merkmale des Anspruchs 1 und vorrichtungsmäßig durch die kennzeichnenden Merkmale des Anspruchs 13 gelöst.

Bei der Erfindung werden aus den Meßwerten der beiden Unwuchtmeßläufe und dem Wert des gespeicherten Verdrehwinkels zwischen Reifen und Scheibenrad bei diesen Meßläufen sowohl der Unwuchtvektor des Reifens als auch der durch geometrische Ungleichförmigkeiten des Scheibenrades bedingte Unwuchtvektor für die Berechnung des Matchwinkels verwendet. In «Werkstatt und Betrieb 103» (1970, 3, Seiten 183 bis 188) und aus «Werkstatt und Betrieb 105» (1972) Heft 11, Seiten 823 bis 827, ist es bekannt, die geometrischen Ungleichförmigkeiten des Scheibenrades durch Abtasten zu ermitteln. In der DE-OS 3 003 127 werden geometrische Ungleichförmigkeiten des Scheibenrades überhaupt nicht berücksichtigt.

Unter der Voraussetzung, daß das Scheibenrad keine oder nur vernachlässigbar geringe Massenungleichförmigkeiten aufweist, lassen sich aus den während der beiden Meßläufe gewonnenen Meßwerten die statischen und dynamischen Unwuchtvektoren bzw. 1. Harmonische ermitteln, die auf ungleiche Massenverteilung am Reifen und auf geometrische Ungleichförmigkeiten (Exzentrizitäts- bzw. Zentrierfehler oder Formfehler) des Scheibenrads zurückzuführen sind, ermitteln. Die geometrischen Ungleichförmigkeiten des Scheibenrades äußern sich bei aufmontiertem Reifen als Unwuchtkräfte, da der Reifen durch die geometrischen Ungleichförmigkeiten des Scheibenrades aus seiner zentrierten Lage gebracht ist und die hieraus resultierenden Unwuchtkräfte demzufolge auf die geometrischen Ungleichförmigkeiten des Scheibenrades zurückführbar sind.

Der bei der Erfindung erzielten Optimierung der Laufruhe liegt die Überlegung zugrunde, daß die aus den Massenungleichförmigkeiten des Reifens resultierenden Unwuchtkräfte den durch die geometrischen Ungleichförmigkeiten des Scheibenrades bedingten Unwuchtkräften am Kraftfahrzeugrad entgegengerichtet werden. Aus den beiden Meßläufen lassen sich die erforderlichen Unwuchtvektoren bestimmen.

Falls das Scheibenrad eine geringere Qualität aufweist und eine ungleiche Massenverteilung besitzt, was zu Unwuchtkräften führt, werden in einem zusätzlichen Meßlauf, wie im Anspruch 2 angegeben, an dem bloßen Scheibenrad, ohne aufgezogenen Reifen, diese Unwuchtkräfte gemessen und eliminiert. Das Eliminieren kann dadurch geschehen, daß entsprechende Unwuchtgewichte an der Felge befestigt werden oder daß die gemessenen Unwuchtkräfte gespeichert und bei der nachfolgenden Auswertung im Sinne der Eliminierung berücksichtigt werden. Dieser Meßlauf mit der bloßen Felge wird bevorzugt vor den beiden Meßläufen durchgeführt, bei welchen der Reifen auf das Scheibenrad aufgezogen ist.

Für eine einwandfreie Optimierung der Laufruhe ist es nämlich erforderlich, daß die aus ungleicher Massenverteilung des Scheibenrades resultierenden Unwuchtkräfte, sei es durch entsprechenden Unwuchtausgleich an der Felge oder durch entsprechende Berücksichtigung bei der Berechnung, eliminiert werden.

Ferner werden für die Ermittlung des beim Matchen zur Anwendung kommenden Verdrehwinkels zwischen Reifen und Scheibenrad die ermittelten statischen und dynamischen Unwuchtvektoren mit Einflußfaktoren multipliziert, die proportional sind zu untereinander verschiedenen Einflüssen, die auf die Laufruhe des Kraftfahrzeugrades einwirken.

Durch die Maßnahme des Anspruchs 3 wird berücksichtigt, daß die statische Unwucht auf die Laufruhe des Kraftfahrzeugrades einen anderen Einfluß ausübt als die dynamische Unwucht. Durch die Maßnahme des Anspruchs 4 wird berücksichtigt, daß die Reifenunwucht einen anderen Einfluß auf die Laufruhe des Kraftfahrzeugrades ausübt als die aus den geometrischen Ungleichförmigkeiten des Scheibenrades resultierende Unwucht.

Durch die Maßnahme des Anspruchs 5 wird berücksichtigt, daß die Unwuchtkräfte des am Fahrzeug montierten Kraftfahrzeugrades an der Außenseite des Rades mit einem größeren Hebelarm an der Radaufhängung zur Wirkung kommen als die an der Innenseite liegenden Unwuchtkräfte.

Durch das in den Ansprüchen 6 bis 8 angegebene Wenden des Reifens um eine zu seiner Laufachse senkrechte Achse ist es möglich, am Reifen wirkende Unwuchten und durch das Scheibenrad veranlaßte Unwuchtkräfte in den beiden Ausgleichsebenen in entgegengesetzte Richtungen beim Matchen gegeneinander zu richten.

Bei der durch die Erfindung erzielten Optimierung der Laufruhe des Kraftfahrzeugrades wird die Tatsache ausgenützt, daß in den meisten Fällen die im wesentlichen aus Unwuchten, Radial- und Seitenkraftschwankungen resultierende Laufunruhen die gleichen Ursachen haben. Zur Verbesserung der Laufruhe trägt auch der Umstand bei, daß die noch verbleibenden Unwuchtkräfte relativ niedrig sind und mit geringen Ausgleichsgewichten ausgeglichen werden können. Dies wirkt sich insbesondere bei der Verringerung des Latschmassenunterschieds, der ebenfalls die Laufruhe des Kraftzeugrades beeinflußt, vorteilhaft aus.

Anhand der beiliegenden Figuren wird die Erfindung noch näher erläutert. Es zeigt:

Fig. 1 ein Blockschaltbild für die Vorrichtung zur Durchführung der Erfindung und

Fig. 2(A) und 2(B) Vektordiagramme zur Erläuterung der Erfindung.

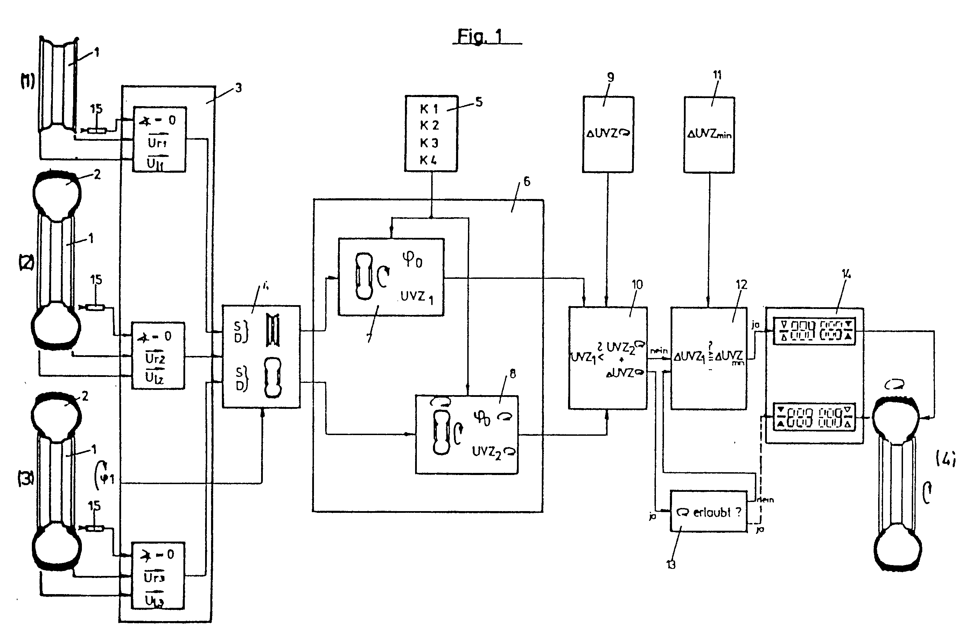

Ein Kraftfahrzeugreifen, der aus einem Scheibenrad 1 und einem darauf aufgezogenen Reifen 2 besteht, wird unter Zuhilfenahme einer in der Fig. 1 dargestellten Schaltungsanordnung durch Matchen, d.h. durch Verdrehen des Reifens 2 gegenüber dem Scheibenrad 1, im Hinblick auf seine Laufruhe optimiert. Die Meßläufe werden an einer nicht näher dargestellten Auswuchtmaschine durchgeführt, wobei das Scheibenrad bzw. das Kraftfahrzeugrad auf eine Wuchtspindel in bekannter Weise aufgespannt ist. Nicht näher dargestellte Meßwertaufnehmer messen während des Meßlaufs Größe und Winkellage von Unwuchten, wobei in einer an die Meßwertaufnehmer angeschlossenen Auswerteelektronik 3 differenziert wird nach Unwuchtkräften $\vec{U}_r$ für einen Unwuchtvektor in einer rechten Ausgleichsebene und nach $\vec{U}_\ell$ für einen Unwuchtvektor in einer linken Ausgleichsebene. Eine Abtasteinrichtung 15 tastet eine Markierung auf dem Scheibenrad 1, beispielsweise das Luftventil oder eine andere feste Einrichtung am Scheibenrad 1, ab und gibt an die Auswerteelektronik 3 ein entsprechendes Winkelbezugssignal, beispielsweise für den Winkel 0.

Es wird zunächst der Verfahrensablauf erläutert, bei welchem die Messungen an Kraftfahrzeugrädern durchgeführt werden, die Scheibenräder mit vernachlässigbar geringen Massenungleichförmigkeiten besitzen. Bei Stahlscheibenrädern kann man in der Regel davon ausgehen, daß diese vernachlässigbar geringe Massenungleichförmigkeiten aufweisen, so daß der in der Fig. 1 dargestellte Meßlauf (1) mit dem bloßen Scheibenrad 1 ohne aufgezogenem Reifen weggelassen werden kann. Es ist natürlich möglich, diesen Meßlauf (1) mit bloßem Scheibenrad immer durchzuführen, um festzustellen, ob am Scheibenrad durch Massenungleichförmigkeiten verursachte Unwuchten, welche durch die nachfolgende Berechnung oder durch an der Felge anzusetzende Ausgleichsgewichte eliminiert werden müssen, vorhanden sind oder nicht.

Für die Durchführung des Meßlaufs (2) wird der Reifen 2 auf das Scheibenrad 1 in beliebiger Winkelstellung aufgezogen. In deisem Meßlauf werden die Unwuchten für die linke und rechte Ausgleichsebene gemessen und in der Auswerteelektronik 3 die Unwuchtvektoren $\vec{U}_{\ell 2}$ und $\vec{U}_{r 2}$ für die linke und rechte Ausgleichsebene ermittelt.

Nach diesem Meßlauf wird der Reifen 2 auf dem Scheibenrad 1 um einen bestimmten Winkel $\varphi_1$ verdreht. Dieser Winkel kann beliebig, bevorzugt jedoch 180°, sein und wird für die Auswertung in einem Vektorrechner 4 gespeichert. Dann wird ein dritter Meßlauf (3) durchgeführt, während welchem in der Auswerteelektronik 3 für die rechte und linke Ausgleichsebene die Unwuchtvektoren $\vec{U}_{r 3}$ und $\vec{U}_{\ell 3}$ ermittelt werden.

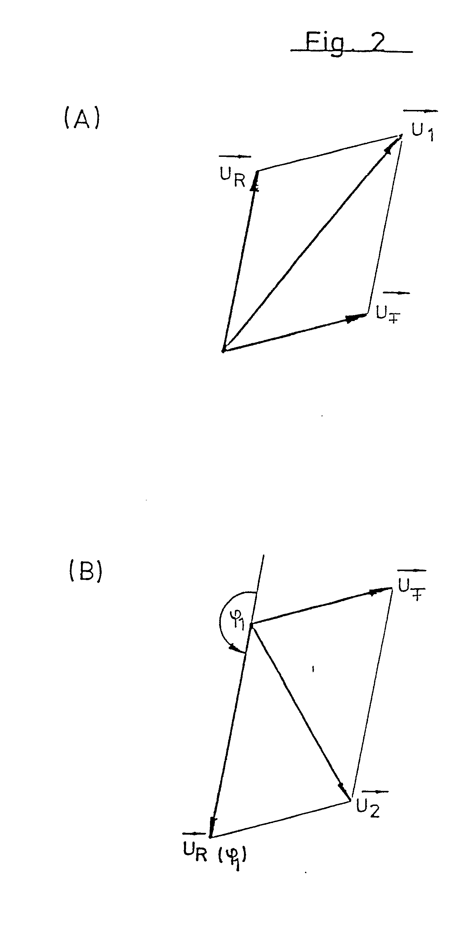

In der Fig. 2 wird anhand der beiden Vektordiagramme (A) und (B) dargestellt, wie sich die Lage der gemessenen Unwuchtvektoren $\vec{U}_2$ (stellvertretend für die Unwuchtvektoren in beiden Ausgleichsebenen beim zweiten Meßlauf) und $\vec{U}_3$ (stellvertretend für die Unwuchtvektoren in beiden Ausgleichsebenen beim dritten Meßlauf) ändert. Diese Unwuchtvektoren resultieren aus den Einzelunwuchtvektoren $\vec{U}_R$ für den Reifen und $\vec{U}_F$, der durch geometrische Ungleichförmigkeiten des Scheibenrades (Felge) bedingt ist, wobei im Diagramm (B) die Lage von $\vec{U}_R$ ($\varphi_1$) nach dem Verdrehen des Reifens 2 um den Winkel $\varphi_1$ (z.B. 180°) gegenüber dem Scheibenrad 1 dargestellt ist. Der Unwuchtvektor $\vec{U}_F$ ist in beiden Meßläufen gleich, während sich der Einzelunwuchtvektor $U_R$ ($\varphi_1$) und der im zweiten Meßlauf resultierende Unwuchtvektor $\vec{U}_2$ für das Kraftfahrzeugrad ändern. Da die gemessenen Werte für die am Kraftfahrzeugrad gemessenen Unwuchten $\vec{U}_1$ und $\vec{U}_2$, welche stellvertretend sind für die bezüglich der linken und rechten Ausgleichsebene in der Auswerteelektronik 3 in Form der 1. Harmonischen ermittelten Unwuchtvektoren $\vec{U}_{r2}$, $\vec{U}_{\ell 2}$, $\vec{U}_{r3}$ und $\vec{U}_{\ell 3}$, sowie der Verdrehwinkel $\varphi_1$ bekannt sind und der Unwuchtvektor $\vec{U}_F$ für das Scheibenrad in beiden Meßläufen (2) und (3) konstant geblieben ist, lassen sich unter Zuhilfenahme der Beziehungen:

$$\vec{D}_r = 1/2\ (\vec{U}_\ell - \vec{U}_r)$$
$$\vec{D}_\ell = 1/2\ (\vec{U}_r - \vec{U}_\ell)$$
$$\vec{S} = \vec{U}_\ell + \vec{U}_r$$

die dynamischen und statischen Unwuchtvektoren, die durch geometrische Ungleichförmigkeiten des Scheibenrades bedingt sind, und die dynamischen und statischen Unwuchtvektoren für den Reifen bestimmen. In den vorstehenden Formeln bedeuten hierbei stellvertretend für die Unwuchtvektoren sowohl des Scheibenrads als auch des Reifens:

$\vec{D}_r$ die dynamischen Unwuchtvektoren der rechten Ausgleichsebene,

$\vec{D}_\ell$ die dynamischen Unwuchtvektoren in der linken Ausgleichsebene und

$\vec{S}$ die statischen Unwuchtvektoren.

Die dynamischen Unwuchtvektoren für die jeweils linke und rechte Ausgleichsebene am Reifen und am Scheibenrad sowie die jeweiligen statischen Unwuchtvektoren für Reifen und Scheibenrad werden im Vektorrechner 4 ermittelt.

Falls es sich um Scheibenräder handelt, bei denen aufgrund von Massenungleichförmigkeiten so hohe statische und dynamische Unwuchtkräfte an der bloßen Felge auftreten, daß diese berücksichtigt werden müssen, werden diese Unwuchtkräfte, falls sie nicht durch Anbringen entsprechender Ausgleichsgewichte an der Felge eliminiert sind, durch die Berechnung im Vektorrechner 4 eliminiert. In der Auswerteschaltung 3 werden hierzu aus den von den Meßwertaufnehmern abgegebenen Meßwerten für die beiden Ausgleichsebenen die Unwuchtvektoren $\overrightarrow{U_{r1}}$ und $\overrightarrow{U_{t1}}$ ermittelt. Insbesondere bei Leichtmetallscheibenrädern empfiehlt sich die Durchführung des Meßlaufs (1) mit dem bloßen Scheibenrad.

In einem an den Vektorrechner 4 angeschlossenen Optimierungsrechner 6 werden die durch das Scheibenrad bedingten und die für den Reifen ermittelten dynamischen und statischen Unwuchtvektoren mit Einflußfaktoren K1, K2, K3 und K4, welche in einem Speicher 5 enthalten sind, multipliziert. Diese Einflußfaktoren können durch beispielsweise eine Tastatur oder eine andere Eingabeeinrichtung in den Speicher 5 eingegeben werden. Der Einflußfaktor K1 gibt den Einfluß der dynamischen Unwuchten, der Einflußfaktor K2 den Einfluß der statischen Unwuchten, der Einflußfaktor K3 den Unterschied der Einflüsse des Scheibenrades und des Reifens und der Einflußfaktor K4 den Unterschied der Einflüsse der Radaußenseite und Radinnenseite bei der Auswirkung auf die Laufruhe des Kraftfahrzeugrades wieder. Bei diesen Einflußfaktoren handelt es sich um empirische Werte. Die Einflußfaktoren hängen vom Kraftfahrzeugtyp und auch von dem Typ des Kraftfahrzeuges ab. Größenordnungsmäßig haben diese Faktoren etwa folgende Werte:

$$K1 \sim 0,70$$
$$K2 \sim 1,00$$
$$K3 \sim 1,00$$
$$K4 \sim 1,20$$

Im Optimierungsrechner 6 wird einerseits, dargestellt durch eine Einheit 7, der optimale Matchwinkel $\varphi_0$, der zugeordnet ist zu einem beim Matchen erzielbaren minimalen, nach dem Matchen noch verbleibenden ersten Laufunruhewert $UVZ_1$, ermittelt. Ferner wird im Optimierungsrechner 6, dargestellt durch eine Einheit 8, ermittelt, ob beim Wenden des Reifens um eine zu seiner Laufachse senkrechte Achse mit zugeordnetem Matchwinkel $\varphi_0$ durch einen erzielbaren zweiten und noch verbleibenden Laufunruhewert $UVZ_2$ eine Verringerung des nach dem Matchen noch verbliebenen ersten Laufunruhewertes $UVZ_1$ erreicht wird. Das Wenden kann dann zu einer weiteren Verringerung dieses nach dem Matchen noch verbliebenen Laufunruhewertes führen, wenn beispielsweise durch den Reifen und das Scheibenrad in beiden Ausgleichsebenen entgegengesetzt gerichtete Unwuchtkräfte hervorgerufen werden.

In einer dem Optimierungsrechner 6 nachgeordneten Vergleichseinrichtung 10 wird gegebenenfalls unter Berücksichtung eines in einem Speicher 9 abgespeicherten Differenz-Grenzwertes $\Delta UVZ$ für die Differenz der beiden Laufunruhewerte $UVZ_1$ und $UVZ_2$ ermittelt, ob der nach dem Matchen noch verbleibende erste Laufunruhewert $UVZ_1$ kleiner ist als der noch verbleibende zweite Laufunruhewert $UVZ_2$ nach dem Wenden, wobei gegebenenfalls dem zweiten Laufunruhewert $UVZ_2$ der im Speicher 9 gespeicherte Differenz-Grenzwert $\Delta UVZ$ hinzuaddiert wird. Durch entsprechende Bemessung des Differenz-Grenzwertes $\Delta UVZ$ läßt sich ermitteln, ob ein zusätzliches Wenden des Reifens sich lohnt.

In einem weiteren Vergleicher 12 kann der Unterschied $\Delta UVZ_1$ zwischen dem Laufunruhewert, der nach der ersten Verdrehung des Reifens 2 gegenüber dem Scheibenrad 1 um den Verdrehwinkel $\varphi_1$ zwischen den beiden Meßläufen (2) und (3) mit aufgezogenem Reifen erreicht wird, und dem nach dem Matchen bei der zweiten Verdrehung des Reifens gegenüber dem Scheibenrad um den Verdrehwinkel $\varphi_0$ erzielbaren ersten Laufunruhewert $UVZ_1$ mit einem weiteren, in einem Speicher 11 abgespeicherten Minimalwert $\Delta UVZ_{min}$ verglichen werden. Hierdurch läßt sich feststellen, ob sich die Durchführung des Matchens, d.h. das zweite Verdrehen des Reifens 2 gegenüber dem Scheibenrad 2 um den Matchwinkel $\varphi_0$, lohnt.

In Abhängigkeit von den Vergleichsergebnissen wird dann kein Matchen durchgeführt oder allein das Verdrehen des Reifens 2 gegenüber dem Scheibenrad 1 in Abhängigkeit von dem Matchwinkel $\varphi_0$ oder noch zusätzlich dazu das Wenden des Reifens 2 auf dem Scheibenrad 1. Dies erfolgt in einem mit (4) in der Fig. 1 bezeichneten Verfahrensschritt.

Eine weitere Entscheidungseinrichtung 13, welche dem Vergleicher 10 nachgeschaltet ist, kann entscheiden, ob das Wenden des Reifens 2 um eine zu seiner Laufachse senkrechte Achse erlaubt ist oder nicht. In einer Anzeigeeinrichtung 14 kann dann jeweils der entsprechende Matchwinkel, um welchen der Reifen 2 gegenüber dem Scheibenrad 1 verdreht werden muß, angezeigt werden. Das Verdrehen des Reifens 2 gegenüber dem Scheibenrad 1 erfolgt dann bevorzugt ausgehend von der letzten Winkellage, die der Reifen 2 gegenüber dem Scheibenrad 1 im Meßlauf (3) eingenommen hat. Bei der Ermittlung des Matchwinkels $\varphi_0$ bzw. bei der zweiten Verdrehung des Reifens gegenüber dem Scheibenrad beim Matchen ist der gespeicherte Winkel $\varphi_1$, mit welchem nach dem Meßlauf (2) der Reifen 2 gegenüber dem Scheibenrad 1 zum ersten Mal verdreht wurde, zu berücksichtigen.

Bei der Erfindung wird eine Minimierung der Einflußgrößen, welche die Laufruhe eines Kraftfahrzeugrades stören, erreicht. Es werden die günstigsten Voraussetzungen geschaffen, um durch Matchen und gegebenenfalls durch Wenden des Reifens gegenüber dem Scheibenrad, eine optimale Laufruhe des kompletten Kraftfahrzeugrades zu erzielen. An diesem werden nach dem Matchen gegebenenfalls noch vorhandene Restunwuchten durch entsprechendes Einsetzen von Ausgleichsgewichten beseitigt. In vorteilhafter Weise können weiterhin die hintereinander an den gemessenen Kraftfahrzeugrädern ermittelten statischen und dynamischen Unwuchtvektoren gespeichert werden. Durch Vergleich dieser gespeicherten Daten läßt sich eine weitere Optimierung der Laufruhe erreichen dadurch, daß beim Errechnen sich ergebende günstigere Paarungen von Reifen und Scheibenrad bei den schon gemessenen Kraftfahrzeugreifen sich ergeben. Durch entsprechende Umpaarung können dann die Reifen und Scheibenräder der in Frage kommenden Kraftfahrzeugräder gegeneinander ausgetauscht werden. Hierdurch läßt sich vermeiden, daß beispielsweise bei einem Kraftfahrzeugrad mit guter Felge und schlechtem Reifen oder gutem Reifen und schlechter Felge keine Optimierung der Laufruhe erreicht werden kann. Durch entsprechenden Austausch von Reifen und Felge in Abhängigkeit von dem vorstehend angegebenen Vergleich der erfaßten Unwuchtvektoren für die gemessenen Kraftfahrzeugräder läßt sich die angestrebte Optimierung dann erzielen.

Auch ist es zusätzlich noch möglich, mit Hilfe von Vergleichseinrichtungen und den verwendeten Grenz- und Minimalwerten sowie mit zulässigen Ver- gleichszahlen für die verbleibenden Laufunruhewer- te, anzuzeigen, ob ungünstige Laufunruhe-Konfigurationen oder Unwuchtkonfigurationen oder nicht weiter verbesserbare Zustände bei gemessenen Kraftfahrzeugrädern vorhanden sind.

**Patentansprüche**

1. Verfahren zum Optimieren der Laufruhe eines Kraftfahrzeugrades, bestehend aus Scheibenrad und darauf aufgezogenem Reifen, bei dem die vom Reifen und vom Scheibenrad verursachten Unwuchten in Meßläufen, bei denen wenigstens in einem Meßlauf der Reifen am Scheibenrad in beliebiger Winkelstellung montiert ist, ermittelt werden und durch Verdrehen (Matchen) um einen Match-Winkel, der aus den ermittelten Unwuchtvektoren berechnet wird, der Reifen und das Scheibenrad in eine Lage zueinander gebracht werden, in welcher vom Reifen ausgehende Kräfte den vom Scheibenrad verursachten Kräften entgegengerichtet sind, dadurch gekennzeichnet, daß
— nach dem Meßlauf, bei welchem der Reifen in beliebiger Winkelstellung am Scheibenrad montiert ist, zunächst der Reifen und das Scheibenrad um einen bestimmten Winkel, der gespeichert wird, gegeneinander verdreht werden und dann ein weiterer Unwuchtmeßlauf durchgeführt wird, und
— aus den Meßwerten dieser beiden Unwuchtmeßläufe und dem Wert des gespeicherten bestimmten Winkels sowohl der Unwuchtvektor des Reifens als auch der durch geometrische Ungleichförmigkeiten des Scheibenrades bedingte Unwuchtvektor für die Berechnung des Match-Winkels bestimmt werden.

2. Verfahren nach Anspruch 1, dadurch gekennzeichnet, daß zum Eliminieren der Massenungleichförmigkeit des Scheibenrades in einem zusätzlichen Meßlauf die statischen und/oder dynamischen Un- wuchtvektoren des Scheibenrades ermittelt wer- den.

3. Verfahren nach Anspruch 1 oder 2, dadurch gekennzeichnet, daß die statischen Unwuchtvektoren mit einem dem Einfluß der statischen Unwucht auf die Laufruhe proportionalen Einflußfaktor und die dynamischen Unwuchtvektoren mit einem dem Einfluß der dynamischen Unwucht auf die Laufruhe proportionalen Einflußfaktor multipliziert werden.

4. Verfahren nach einem der Ansprüche 1 bis 3, dadurch gekennzeichnet, daß die statischen und dynamischen Unwuchtvektoren ferner mit einem Einflußfaktor multipliziert werden, der dem Unterschied der Einflüsse der Reifenunwuchten und der aus den geometrischen Ungleichförmigkeiten resultierenden Unwuchten auf die Laufruhe des Kraftfahrzeugrades proportional ist.

5. Verfahren nach einem der Ansprüche 1 bis 4, dadurch gekennzeichnet, daß die statischen und dynamischen Unwuchtvektoren ferner mit einem Einflußfaktor multipliziert werden, der dem Unterschied der Einflüsse der Unwucht an der Radaußenseite und der Unwucht an der Radinnenseite auf die Laufruhe des Kraftfahrzeugrades proportional ist.

6. Verfahren nach einem der Ansprüche 1 bis 5, dadurch gekennzeichnet, daß aus den ermittelten statischen und dynamischen Unwuchtvektoren sowie den Einflußfaktoren ein nach dem beim Matchen durchgeführten Verdrehen noch verbleibender erster Laufunruhewert und ein bei zusätzlichem Wenden des Reifens um eine zur Laufachse des Kraftfahrzeugrades senkrechte Achse noch verbleibender zweiter Laufunruhewert vor dem Durchführen des Matchens errechnet werden.

7. Verfahren nach einem der Ansprüche 1 bis 6, dadurch gekennzeichnet, daß das Verdrehen beim Matchen nur dann durchgeführt wird, wenn der dann verbleibende erste Laufunruhewert einen Grenzwert unterschreitet.

8. Verfahren nach Anspruch 6 oder 7, dadurch gekennzeichnet, daß das zusätzliche Wenden des Reifens nur dann durchgeführt wird, wenn der zweite Laufunruhewert um einen bestimmten Differenzwert geringer ist als der erste Laufunruhewert.

9. Verfahren nach einem der Ansprüche 1 bis 8, dadurch gekennzeichnet, daß zur Erzielung eines bei den verschiedenen Meßläufen gleichbleibenden Winkelbezugs eine Markierung am Scheibenrad abgetastet wird.

10. Verfahren nach Anspruch 9, dadurch gekennzeichnet, daß das Radventil als Markierung abgetastet wird.

11. Verfahren nach einem der Ansprüche 1 bis 10, dadurch gekennzeichnet, daß zur Bestimmung des Verdrehwinkels beim Verdrehen des Reifens gegenüber dem Scheibenrad zwischen den Meßläufen und/oder beim Matchen am Reifen eine Markierung abgetastet wird.

12. Verfahren nach einem der Ansprüche 1 bis 11, dadurch gekennzeichnet, daß die ermittelten sta- tischen und dynamischen Unwuchtvektoren aufein- anderfolgender gemessener Kraftfahrzeugräder ge- speichert und zur Erzielung eines minimierten Laufunruhewertes durch Umpaarung von Reifen und Fel- ge zweier verschiedener gemessener Kraftfahrzeug- räder verglichen werden.

13. Vorrichtung zum Auswuchten eines Kraftfahrzeugrades mit Meßwertaufnehmern, die an eine Auswerteelektronik angeschlossen sind, in welcher die Unwuchtvektoren für zwei Ausgleichsebenen ermittelt werden, dadurch gekennzeichnet, daß zur Durchführung eines Verfahrens nach Anspruch 1 an die Auswerteelektronik (3) ein Vektorrechner (4) für die getrennte Ermittlung der auf den Reifen und das Scheibenrad bezogenen statischen und dynamischen Unwuchtvektoren angeschlossen ist, daß an den Vektorrechner (4) ein Optimierungsrechner (6) für die Berechnung eines nach dem beim Matchen durchgeführten Verdrehen noch verbleibender ersten Laufunruhewertes und eines bei zusätzlichem Wenden des Reifens noch verbleibenden zweiten Laufunruhewertes angeschlossen ist und daß der Optimierungsrechner (6) mit einem Speicher (5) verbunden ist, welcher die Einflußfaktoren enthält.

14. Vorrichtung nach Anspruch 13, dadurch gekennzeichnet, daß an den Optimierungsrechner (6) eine Vergleichseinrichtung (10 und/oder 12) angeschlossen ist, die mit Speichern (9 und/oder 11) für Laufunruhegrenzwerte oder Laufunruheminimalwerte verbunden sind.


## Claims

1. A process for optimising the smoothness with which a motor vehicle wheel rotates, the wheel comprising a disc wheel and a tyre fitted thereon, wherein the unbalances caused by the tyre and the wheel disc are ascertained in measuring runs in which the tyre is mounted on the disc wheel at any angular position at least in one measuring run, and, by turning movement (matching) by a match angle which is calculated from the ascertained unbalance vectors, the tyre and the disc wheel are moved into a position relative to each other in which forces originating from the tyre are oppositely directed to the forces caused by the disc wheel, characterised in that

— after the measuring run in which the tyre is mounted on the disc wheel in any angular position, initially the tyre and the disc wheel are turned relative to each other by a given angle which is stored, and then a further unbalance measuring run is performed, and

— both the unbalance vector of the tyre and also the unbalance vector caused by geometrical non-uniformities of the disc wheel are determined, for calculating the match angle, from the measurement values of said two unbalance measuring runs and the value of the stored given angle.

2. A process according to claim 1 characterised in that, to eliminate the non-uniformity in respect of mass of the disc wheel, the static and/or dynamic unbalance vectors of the disc wheel are ascertained in an additional measuring run.

3. A process according to claim 1 or claim 2 characterised in that the static unbalance vectors are multiplied by an influencing factor which is proportional to the influence of static unbalance on the smoothness with which the wheel rotates and the dynamic unbalance vectors are multiplied by an influencing factor which is proportional to the influence of dynamic unbalance on the smoothness with which the wheel rotates.

4. A process according to one of claims 1 to 3 characterised in that the static and dynamic unbalance vectors are further multiplied by an influencing factor which is proportional to the difference in respect of the influences of tyre unbalance and unbalances resulting from the geometrical non-uniformities, on the smoothness with which the motor vehicle wheel rotates.

5. A process according to one of claims 1 to 4 characterised in that the static and dynamic unbalance vectors are further multiplied by an influencing factor which is proportional to the difference in respect of the influences of unbalance at the outward side of the wheel and unbalance at the inward side of the wheel, on the smoothness with which the motor vehicle wheel rotates.

6. A process according to one of claims 1 to 5 characterised by calculating from the ascertained static and dynamic unbalance vectors and the influencing factors, a first value in respect of lack of smoothness with which the wheel rotates, which still remains after the turning operation which is carried out in the matching procedure, and a second value in respect of lack of smoothness with which the wheel rotates, which still remains when the tyre is additionally turned about an axis normal to the axis of rotation of the motor vehicle wheel, prior to carrying out the matching procedure.

7. A process according to one of claims 1 to 6 characterised in that the turning operation in the matching procedure is carried out only when the then remaining first value in respect of lack of smoothness with which the wheel rotates is below a limit value.

8. A process according to claim 6 or claim 7 characterised in that the operation of additionally turning the tyre is only carried out when the second value in respect of lack of smoothness with which the wheel rotates is lower than the first value in respect of lack of smoothness, by a given differential value.

9. A process according to one of claims 1 to 8 characterised in that a marking on the disc wheel is sensed in order to produce an angular reference which remains the same in the various measuring runs.

10. A process according to claim 9 characterised in that the wheel valve is sensed as the marking.

11. A process according to one of claims 1 to 10 characterised in that a marking on the tyre is sensed to determine the angle of turning movement when turning the tyre relative to the disc wheel between the measuring runs and/or in the matching operation.

12. A process according to one of claims 1 to 11 characterised in that the ascertained static and dynamic unbalance vectors of successive measured motor vehicle wheels are stored and two different measured motor vehicle wheels are compared in order to achieve a minimised value in respect of lack of smoothness, by changing the pairing of tyre and rim.

13. Apparatus for balancing a motor vehicle wheel comprising measurement value pick-up means which are connected to an electronic evaluation means in which the unbalance vectors for two balancing planes are ascertained, characterised in that, to carry out a process according to claim 1, a vector calculating means (4) for separately ascertaining the static and dynamic unbalance vectors related to the tyre and the disc wheel is connected to the electronic evaluation means (3), that an optimisation calculating means (6) for calculation of a first value in respect of lack of smoothness with which the wheel rotates, which still remains after the turning operation carried out in the matching procedure, and a second value in respect of lack of smoothness with which the wheel rotates, which still remains when the tyre is additionally turned, is connected to the vector calculating means (4), and that the optimisation calculating means (6) is connected to a storage means (5) which contains the influencing factors.

14. Apparatus according to claim 13 characterised in that connected to the optimising calculating means (6) is a comparison means (10 and/or 12) which are connected to storage means (9 and/or 11) for limit values or minimum values in respect of lack of smoothness with which the wheel rotates.

## Revendications

1. Procédé pour optimiser la marche régulière d'une roue de véhicule automobile, constitué par une roue pleine et un pneumatique monté sur cette roue, et selon lequel on détermine les balourds provoqués par le pneumatique et la roue pleine au cours de cycles de mesure, pendant lesquels, au moins lors d'un de ces cycles, le pneumatique est monté dans une position angulaire quelconque sur la roue pleine, et on amène le pneumatique et la roue pleine, par rotation (adaptation) sur un angle d'adaptation calculé à partir des vecteurs déterminés du balourd, dans une position relative, dans laquelle des forces émanant du pneumatique sont dirigées en sens opposé des forces provoquées par la roue pleine, caractérisé par le fait que

— après le cycle de mesure, lors duquel le pneumatique est monté dans une position angulaire quelconque sur la roue pleine, on fait tourner l'un par rapport à l'autre le pneumatique et la roue pleine sur un angle déterminé, qui est mémorisé, et on exécute ensuite un autre cycle de mesure du balourd, et

— à partir des valeurs de mesure de ces deux cycles de mesure du balourd et de la valeur de l'angle déterminé mémorisé, on détermine aussi bien le vecteur de balourd du pneumatique que le vecteur de balourd, conditionné par les irrégularités géométriques de la roue pleine, pour le calcul de l'angle d'adaptation.

2. Procédé suivant la revendication 1, caractérisé par le fait que pour éliminer l'irrégularité de la masse de la roue pleine, lors d'un cycle de mesure supplémentaire on mesure les vecteurs du balourd statiques et/ou dynamiques de la roue pleine.

3. Procédé suivant la revendication 1 ou 2, caractérisé par le fait qu'on multiplie les vecteurs du balourd statique par un facteur d'influence proportionnel à l'influence du balourd statique sur la marche régulière, et les vecteurs du balourd dynamiques par un facteur d'influence proportionnel à l'influence du balourd dynamique sur la marche régulière.

4. Procédé selon l'une des revendications 1 à 3, caractérisé par le fait qu'on multiplie en outre les vecteurs des balourds statiques et dynamiques par un facteur d'influence, qui est proportionnel à ladite différence entre les influences des balourds du pneumatique et des balourds, qui résultent des irrégularités géométriques, sur la marche régulière de la roue du véhicule automobile.

5. Procédé suivant l'une des revendications 1 à 4, caractérisé par le fait qu'on multiplie en outre les vecteurs des balourds statiques et dynamiques par un facteur d'influence, qui est proportionnel à la différence des influences du balourd au niveau du côté extérieur de la roue et du balourd au niveau du côté intérieur de la roue, sur la marche régulière de la roue du véhicule automobile.

6. Procédé suivant l'une des revendications 1 à 5, caractérisé par le fait qu'à partir des vecteurs déterminés des balourds statiques et dynamiques ainsi que des facteurs d'influence, on calcule une première valeur d'irrégularité de marche, qui subsiste encore après la rotation exécutée lors de l'adaptation, et une seconde valeur d'irrégularité de marche qui subsiste encore autour d'un axe perpendiculaire à l'axe de rotation de la roue du véhicule automobile, lors d'un retournement supplémentaire du pneumatique, avant la mise en oeuvre de l'adaptation.

7. Procédé suivant l'une des revendications 1 à 6, caractérisé par le fait que la rotation lors de l'adaptation n'est exécutée que lorsque la première valeur d'irrégularité de marche, qui subsiste, tombe au-dessous d'une valeur limite.

8. Procédé suivant la revendication 6 ou 7, caractérisé par le fait que le retournement supplémentaire du pneumatique n'est exécuté que lorsque la seconde valeur d'irrégularité de marche est inférieure, d'une valeur de différence déterminée, à la première valeur d'irrégularité de marche.

9. Procédé suivant l'une des revendications 1 à 8, caractérisé par le fait que pour l'obtention d'une référence angulaire, qui reste constante pour les différents cycles de mesure, on explore une marque apposée sur la roue pleine.

10. Procédé suivant la revendication 9, caractérisé par le fait qu'on explore la valve de gonflage en tant que marque.

11. Procédé suivant l'une des revendications 1 à 10, caractérisé par le fait que pour déterminer l'angle de rotation lors de la rotation du pneumatique par rapport à la roue pleine entre les cycles de mesure et/ou lors de l'adaptation sur le pneumatique, on explore une marque située sur le pneumatique.

12. Procédé suivant l'une des revendications 1 à 11, caractérisé par le fait qu'on mémorise les vecteurs déterminés des balourds statiques et dynamiques de roues successives mesurées d'un véhicule automobile et qu'on les compare pour obtenir une valeur minimale d'irrégularité de marche, en appariant un pneumatique et une jante de deux roues différentes mesurées du véhicule automobile.

13. Dispositif pour compenser le balourd d'une roue de véhicule automobile comportant des capteurs de mesure, qui sont raccordés à un système électronique d'évaluation, dans lequel les vecteurs du balourd sont déterminés pour deux plans d'équilibrage, caractérisé par le fait que pour la mise en oeuvre d'un procédé selon la revendication 1, au système électronique d'évaluation (3) est raccordé un calculateur vectoriel (4) servant à déterminer séparément les vecteurs des balourds statiques et dynamiques, rapportés au pneumatique et à la roue pleine, qu'un calculateur d'optimisation (6) est raccordé au calculateur vectoriel (4), pour le calcul d'une première valeur d'irrégularité de marche, qui subsiste encore après la rotation exécutée lors de l'adaptation, et une seconde valeur d'irrégularité de marche qui subsiste encore lors d'un retournement supplémentaire du pneumatique, et que le calculateur d'optimisation (6) est relié à une mémoire (5) qui contient les facteurs d'influence.

14. Dispositif suivant la revendication 13, caractérisé par le fait qu'au calculateur d'optimisation (6) est raccordé un circuit comparateur (10 et/ou 12), qui est relié à une mémoire (9) et/ou (11) pour des valeurs limites d'irrégularité de marche ou des valeurs minimales d'irrégularité de marche.

8

Fig. 1

## Fig. 2

(A)

(B)